# EUROPÄISCHE PATENTSCHRIFT

(11) **EP 0 338 051 B1**
(45) Veröffentlichungstag und Bekanntmachung des Hinweises auf die Patenterteilung: **02.06.1993**
(21) Anmeldenummer: 88909089.0
(22) Anmeldetag: 04.10.1988
(51) Int. Cl.: B32B 3/20, E04C 2/34, E04C 2/40

(54) **LEICHTBAUELEMENT IN SANDWICHBAUWEISE**
LIGHT-WEIGHT CONSTRUCTIONAL ELEMENT OF SANDWICH STRUCTURE
ELEMENT MODULAIRE LEGER A STRUCTURE EN SANDWICH

(30) Priorität: 08.10.1987 DE 3734373
(43) Veröffentlichungstag der Anmeldung: 25.10.1989
(73) Patentinhaber: Costard, Hellmuth, D-46049 Oberhausen (DE)
(72) Erfinder: Costard, Hellmuth, D-46049 Oberhausen (DE)
(74) Vertreter: Freischem, Werner, Dipl.-Ing.
(86) Internationale Anmeldenummer: EP8800881
(87) Internationale Veröffentlichungsnummer: WO8903299

(56) Entgegenhaltungen:
- EP-A- 0 135 708
- US-A- 3 600 257
- US-A- 3 743 568
- US-A- 3 878 661

## Beschreibung

Die Erfindung betrifft ein Leichtbauelement in Sandwichbauweise mit zwei Deckblechen, die von einer durch Klebung mit den Deckblechen verbundenen wabenförmigen Struktur auf Distanz gehalten sind. Leichtbauelemente dieser Art sind bekannt aus der US-A-3 600 257.

Bei diesem bekannten Leichtbauelement, das als Träger großflächiger Spiegel dient, ist die Herstellung der wabenförmigen Struktur sehr aufwendig.

Aus der US-A-3 878 661 sind Leichtbauplatten bekannt, die sich zusammensetzen aus einer Platte aus Holz oder Sperrholz, auf der gebrauchte Getränkedosen parallel zueinander und rechtwinklig zur Platte mit der geöffneten Seite aufgeklebt sind. Zwischen diesen mit gegenseitigem Abstand auf die Platte aufgeklebten Dosen ist ein erhärtendes Material, wie Schaumkunststoff oder Beton, eingefüllt. Diese Leichtbauplatten dienen insbesondere als Wandelemente im Bauwesen. Die Tragfähigkeit und Belastbarkeit dieser Wandelemente ist relativ gering.

Aufgabe der vorliegenden Erfindung ist es, ein Leichtbauelement der eingangs genannten Art insbesondere für Sonnenkollektoren zu schaffen, das relativ preiswert ist, leicht hergestellt werden kann und eine große Festigkeit aufweist.

Gelöst wird diese Aufgabe dadurch, daß die wabenförmige Struktur aus im wesentlichen zylindrischen Blechdosen gleicher Größe gebildet ist, deren Achsen rechtwinklig zu den Deckblechen stehen und die in dichter Packung angeordnet sind und die an ihren Kontaktstellen miteinander verklebt sind.

Bei dichter Anordnung der Dosen in rechtwinklig zueinander verlaufenden Reihen ist - mit Ausnahme der am Rand befindlichen Dosen - jede Dose über vier Kontaktstreifen mit vier benachbarten Dosen verklebt, während jede am Rand befindliche Dose über drei Kontaktstreifen mit drei benachbarten Dosen verbunden sind. Weil die über die Länge der Dosen sich erstreckenden Klebeverbindungen große Kräfte aufnehmen können, ist diese aus gleichartigen Dosen sich zusammensetzende Wabenstruktur sehr steif und hoch belastbar.

Eine deutliche Erhöhung der Belastbarkeit des Leichtbauelementes läßt sich dadurch erreichen, daß die Dosen in dichtester Packung angeordnet sind, bei der eine Reihe Dosen zur benachbarten Reihe Dosen um den halben Durchmesser der Dosen versetzt ist. Bei dieser Anordnung ist - mit Ausnahme der am Rand befindlichen Dosen - jede Dose über sechs Kontaktstreifen mit sechs benachbarten Dosen verbunden, während jede am Rand befindliche Dose über vier Kontaktstreifen mit vier benachbarten Dosen verbunden ist. Hierdurch wird ein Leichtbauelement geschaffen, dessen Grundelemente nicht extra hergestellt werden müssen, sondern die aus einem Abfallprodukt bestehen.

Die in sehr großen Mengen anfallenden Getränkedosen weisen durch ihre präzise Form einen vielfach höheren Wert auf als es ihrem Rohstoffwert entspricht. Insbesondere die durch Fließpressen aus Aluminium, Aluminiumlegierungen oder Stahl hergestellten, im wesentlichen zylindrischen Blechdosen haben trotz ihrer sehr geringen Wandstärke von beispielsweise 0,07 bis 0,1 mm eine sehr große Formsteifigkeit in Achsrichtung. Diese Formsteifigkeit ist bei gebrauchten Getränkedosen durch den Deckel, der an seiner Peripherie durch Falzen mit der zylindrischen Wand der Dose verbunden ist, noch vergrößert. Das Öffnen des Deckels durch Herausziehen einer Öffnungslasche ändert an dieser sehr großen Formsteifigkeit wenig. Diese Getränkedosen, die in möglichst dichter Anordnung entlang ihren Berührungslinien miteinander verklebt werden, bilden die Zellen der wabenförmigen Struktur, die in bekannter Weise ebenfalls durch Klebung mit den Deckblechen verbunden wird.

Bei der Herstellung von diesen in ihrer Größe und Form genormten Getränkedosen aus Aluminium oder Stahl fällt stets auch ein bestimmter Prozentsatz Ausschuß an, der bisher wieder eingeschmolzen wird. Diese Ausschußdosen können ebenso wie bereits gebrauchte Dosen aufgrund ihrer Formgebung als Wabenzellen für dieses Leichtbauelement herangezogen werden.

Zur Erzielung eines homogenen, beidseitig gleich hoch belastbaren Leichtbauelementes ist es vorteilhaft, diese einseitig offenen Dosen so anzuordnen, daß sie mit der Bodenseite in gleichmäßiger Verteilung abwechselnd an dem einen Deckblech und an dem anderen Deckblech anliegen.

In der folgenden Beschreibung werden Ausführungsbeispiele der Erfindung unter Bezugnahme auf die Zeichnungen näher beschrieben. Die Zeichnungen zeigen in
- Fig. 1: eine Ansicht eines Leichtbauelementes nach der Schnittlinie I-I in Fig. 2,
- Fig. 2: eine Ansicht des Leichtbauelementes nach der Schnittlinie II-II in Fig. 1,
- Fig. 3: die schematische Darstellung eines Solarkollektors bzw. eines Parabolspiegels, dessen Trägerplatte ein Leichtbauelement gemäß der Erfindung ist,
- Fig. 4: eine Draufsicht, teilweise geschnitten und
- Fig. 5: eine Seitenansicht eines Leichtbauelementes nach der Erfindung, teilweise geschnitten und
- Fig. 6: eine Schnittansicht eines Leichtbauelementes mit zwei wabenförmigen Strukturen aus Dosen.

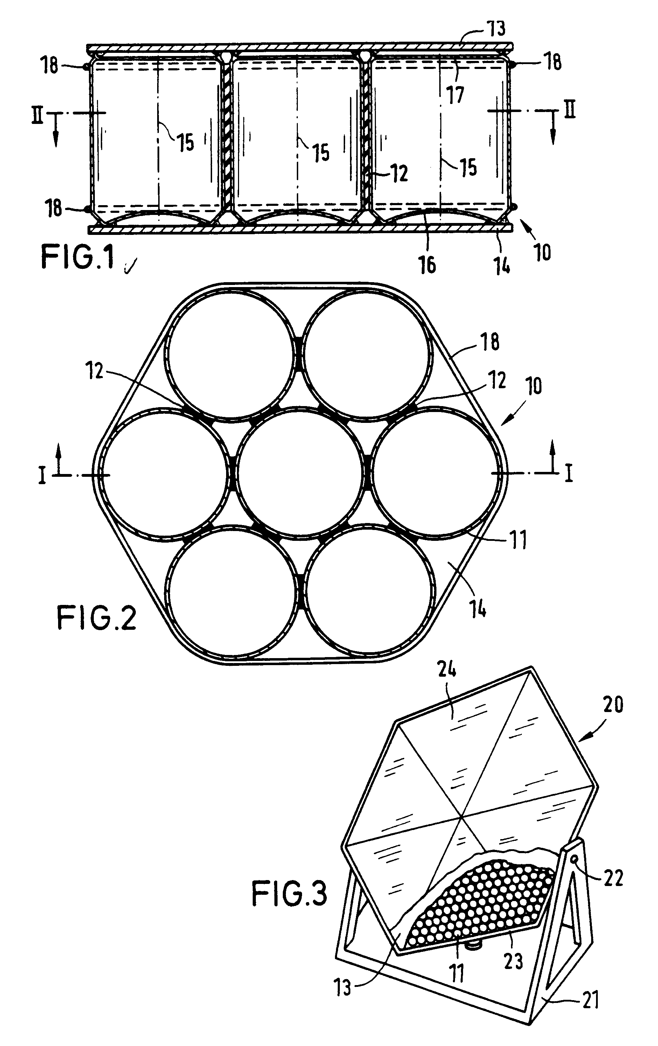

Das Leichtbauelement 10 gemäß Fig. 1 und 2 besteht aus leeren Dosen 11, die an ihren Kontaktstellen 12 miteinander verklebt und zwischen zwei Deckblechen 13,14 angeordnet sind. Die miteinander in dichter Packung verklebten Dosen 11 bilden eine wabenartige Struktur, die durch Klebung, beispielsweise mittels Epoxydharz, mit den Deckblechen 13 und 14 verbunden ist. Das Verkleben der Dosen 11 kann auch durch Anlösen des Einbrennlacks erfolgen, mit dem die Getränkedosen 11 bereits bei ihrer Herstellung zwecks Inhaltsangabe und zum Korrosionsschutz lackiert worden sind. Zur besseren Verbindung der Dosen 11 miteinander können die Dosen eines Leichtbauelements 10 mit einem Draht 18 oder einem Band umspannt werden. Weil Getränkedosen in Nähe des Bodens 16 und des Deckels 17 auch seitlich wirkende Kräfte aufnehmen können, ist dieser umspannende Draht 18 zweckmäßigerweise in Nähe der Deckbleche 13,14 anzuordnen.

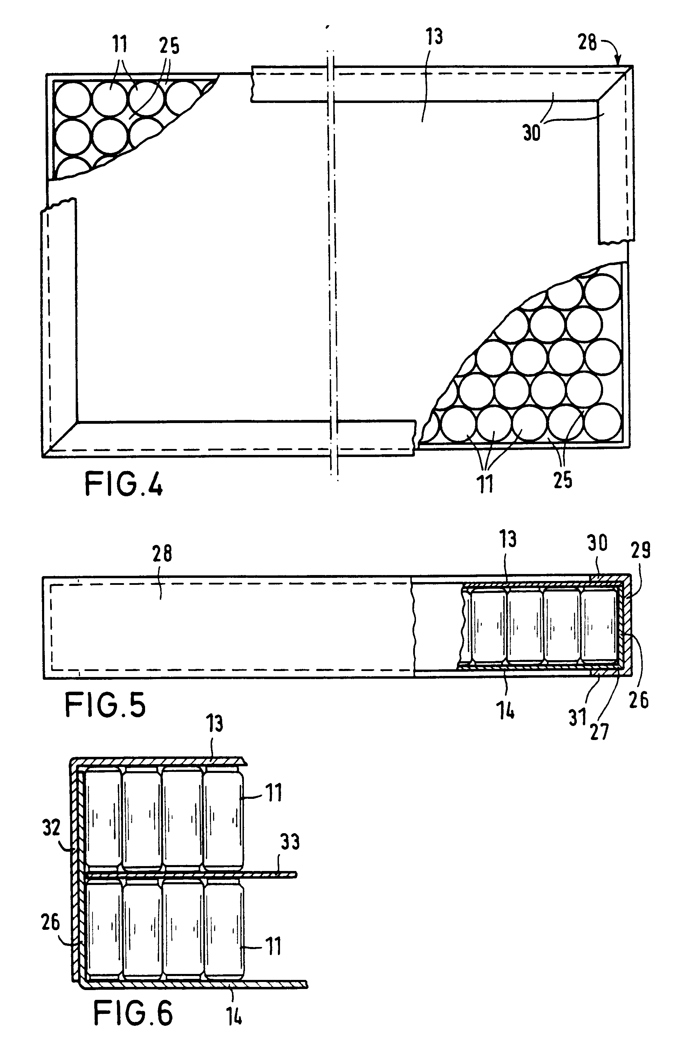

Die Leichtbauelemente 10 nach der Erfindung sind insbesondere als Trägerelement von großflächigen Sonnenkollektoren, Parabolspiegeln 20 und Flachspiegeln für Heliostate geeignet. Fig. 3 zeigt einen Parabolspiegel 20, dessen großflächiger Träger 23 von einem erfindungsgemäßen Leichtbauelement gebildet ist, das so auf einem Gerüst 21 installiert ist, daß der Spiegel dem Stand der Sonne nachgeführt werden kann.

Die Leichtbauelemente gemäß den Fig. 2 und 3 sind sechseckig. Wie Fig. 4 zeigt, können diese auch rechteckig oder quadratisch sein. Wie der linke Teil der Fig. 4 zeigt, können die Dosen 11 in vertikal und horizontal parallelen Reihen angeordnet werden oder - wie der rechte Teil der Fig. 4 zeigt - in dichtester Anordnung, bei der jeweils eine horizontale Reihe zur benachbarten Reihe um den Radius der Dosen 11 versetzt ist. Bei dieser Anordnung sind die Zwischenräume 25 kleiner als die Zwischenräume 25' in der zuerst beschriebenen Anordnung.

Die Ränder des unteren Deckblechs 14 sind nach oben abgekantet, so daß dieses Deckblech 14 mit den Seitenwänden 26 einen offenen Kasten bilden, dessen Größe auf die Größe der Dosen 11 so abgestimmt ist, daß die Dosen 11 mit geringem Spiel in den Kasten eingesetzt werden können. Die verbleibenden Spalte zwischen den Dosen 11 werden mit Klebstoff ausgefüllt. Das Verkleben der Dosen 11 miteinander und mit den Deckblechen 13 und 14 kann auch durch Schaumkunststoff bewirkt werden, der zumindest in den stärker beanspruchten Bereichen die Zwischenräume 25 oder 25' ausfüllt. Es ist auch möglich, zur Erhöhung der Belastbarkeit des Bauelementes die Dosen 11 auszuschäumen. Um größere Kräfte aufnehmen und ableiten zu können, ist das Bauelement von einem Rahmen 28 aus U-Profilschienen 29 umgeben, dessen Flansche 30,31 die Ränder der Deckbleche 13,14 übergreifen.

Wie Fig. 5 zeigt, sind die Dosen 11 in gleichmäßiger Verteilung mit ihren Böden 16 abwechselnd an dem einen Deckblech 13 oder an dem anderen Deckblech 14 anliegend angeordnet, um eine gute Homogenität des Bauelementes zu erreichen.

Bei der Ausführungsform nach Fig. 6 sind zwei wabenförmige Strukturen aus Dosen 11 unter Zwischenfügen einer Zwischenplatte 33 übereinander angeordnet. Auch die Zwischenplatte 33 ist durch Klebung mit den wabenförmigen Strukturen aus Dosen 11 verbunden. Das Deckblech 14 bildet mit seinen Seitenwänden 26 einen offenen Kasten, der die beiden Dosenlagen aufnehmen kann. Das obere Deckblech 13 ist mit nach unten gerichteten Abkantungen 32 versehen, derart, daß ein offener Kasten entsteht, der über den unteren Kasten gestülpt werden kann. Auf diese Weise entstehen um das Bauelement verstärkte Ränder, über welche die aufzunehmende Belastung abgeleitet werden kann.

Durch die Verwendung von in großen Mengen als Abfall anfallender, präzise in genormten Größen hergestellter Getränkedosen und das relativ einfache Zusammensetzen dieser Getränkedosen 11 zu einer Wabenstruktur, können die Leichtbauelemente als großflächige Träger von Reflektoren und Konzentratoren eines Solarofens in den Ländern hergestellt werden, in denen diese Solaröfen mit Vorteil installiert werden. Bei diesen Ländern handelt es sich meist um relativ arme, industrieschwache Länder.

Diese Bauelemente können viele Quadratmeter groß sein. Die Dicke der Platten entspricht der Höhe der verwendeten Getränkedosen zuzüglich der Stärke der Deckbleche, insgesamt also etwa 118 bzw. 171 mm oder aber einem Vielfachen davon.

An den Außenkanten können die Deckbleche abgekantet und verklebt oder verschweißt sein, so daß ein hermetisch abgeschlossener Hohlkörper entsteht.

Durch die beschriebene Sandwich-Bauweise haben die Bauelemente, gemessen am Materialaufwand und Gewicht, eine große Festigkeit und Steifheit. Sie sind witterungsbeständig und schwimmfähig und können zu sehr unterschiedlichen Zwecken eingesetzt werden.

Das Material und die Dicke der Deckbleche ist den jeweils aufzunehmenden Kräften anzupassen. Bauelemente aus Alu-Getränkedosen mit Alu-Deckblechen sind bei großer Belastbarkeit extrem leicht. Ein Leichtbauelement nach der Erfindung kann auch zwei oder mehr Wabenstrukturen aus Dosen aufweisen, wobei zwischen den Wabenstrukturen jeweils eine Zwischenplatte, insbesondere aus Aluminiumblech, angeordnet ist.

## Patentansprüche

1. Leichtbauelement in Sandwichbauweise mit zwei Deckblechen, die von einer durch Klebung mit den Deckblechen verbundenen wabenförmigen Struktur auf Distanz gehalten sind, dadurch gekennzeichnet, daß die wabenförmige Struktur aus im wesentlichen zylindrischen Blechdosen (11) gleicher Größe gebildet ist, deren Achsen (15) rechtwinklig zu den Deckblechen (13,14) stehen und die in dichter Packung angeordnet sind und die an ihren Kontaktstellen (12) miteinander verklebt sind.

2. Leichtbauelement nach Anspruch 1, dadurch gekennzeichnet, daß die Dosen (11) in dichtester Packung angeordnet sind, bei der eine Reihe Dosen (11) zur jeweils benachbarten Reihe Dosen um den halben Durchmesser der Dosen versetzt ist.

3. Leichtbauelement nach Anspruch 1 oder 2, dadurch gekennzeichnet, daß die Dosen (11) mit einem Deckel (17) versehene recycelte Getränkedosen sind.

4. Leichtbauelement nach einem der Ansprüche 1 bis 3, dadurch gekennzeichnet, daß die Dosen (11) mit ihren Böden (16) in gleichmäßiger Verteilung abwechselnd an dem einen Deckblech (13) oder an dem anderen Deckblech (14) anliegen.

5. Leichtbauelement nach einem der Ansprüche 1 bis 4, dadurch gekennzeichnet, daß die Dosen (11) und beziehungsweise oder die Zwischenräume zwischen den Dosen (11) zumindest teilweise mit einem tragfähigen Schaumkunststoff ausgeschäumt sind.

6. Leichtbauelement nach einem der Ansprüche 1 bis 5, dadurch gekennzeichnet, daß die Dosen (11) des Leichtbauelementes (10) in Nähe der beiden Deckbleche (13,14) mit einem zugfesten Draht (18) oder Band umspannt sind.

7. Leichtbauelement nach einem der Ansprüche 1 bis 6, dadurch gekennzeichnet, daß mindestens ein Deckblech (13 oder 14) an seinen Rändern rechtwinklig abgekantet ist, so daß es einen offenen Kasten bildet.

8. Leichtbauelement nach einem der Ansprüche 1 bis 6, dadurch gekennzeichnet, daß es von einem Rahmen (28) umschlossen ist, der aus U-Profilschienen (29) zusammengesetzt ist, deren Flansche (30,31) die Ränder der Deckbleche (13,14) übergreifen.

9. Leichtbauelement nach einem der Ansprüche 1 bis 8, dadurch gekennzeichnet, daß zwischen den Deckblechen (13,14) zwei oder mehr wabenförmige Strukturen aus Dosen (11) angeordnet sind, die durch eine Zwischenplatte (33) voneinander getrennt sind.

10. Anwendung eines Leichtbauelementes nach einem der Ansprüche 1 bis 9 als Trägerelement eines Sonnenkollektors.

## Claims

1. Lightweight construction element in sandwich-type construction with two cover sheet metals which are held at a distance by a honeycombed structure which is connected to the cover sheet metals by adhesion, characterized in that the honeycombed structure is formed by substantially cylindrical cans (11) of the same size whose axes (15) are at a right angle to the cover sheet metals (13,14) and which are arranged in a close packing and glued together at their contact points (12).

2. Lightweight construction element according to claim 1, characterized in that the cans (11) are arranged in the closest possible packing in which one line of cans (11) is offset relative to the respective adjacent line of cans by an amount corresponding to half the diameter of the cans.

3. Lightweight construction element according to claim 1 or 2, characterized in that the cans (11) are recycled beverage cans provided with a cover (17).

4. Lightweight construction element according to one of claims 1 to 3, characterized in that the cans (11) contact one cover sheet metal (13) or the other cover sheet metal (14) with their bases (16) alternately and uniformly distributed.

5. Lightweight construction element according to one of claims 1 to 4, characterized in that the cans (11) and/or the intermediate spaces between the cans (11) are at least partially foamed with a load bearing plastics foam.

6. Lightweight construction element according to one of claims 1 to 5, characterized in that the cans (11) of the lightweight construction element (10) are braced in the vicinity of the two cover sheet metals (13,14) with a high-tensile wire (18) or band.

7. Lightweight construction element according to one of claims 1 to 6, characterized in that at least one cover sheet metal (13 or 14) is beveled at right angles at its edges, so that it forms an open case.

8. Lightweight construction element according to one of claims 1 to 6, characterized in that it is enclosed by a frame (28) which is composed of U-section rails (29) whose flanges (30,31) overlap the edges of the cover sheet metals (13,14).

9. Lightweight construction element according to one of claims 1 to 8, characterized in that two or more honeycombed structures consisting of cans (11) are arranged between the cover sheet metals (13,14) and separated from one another by means of an intermediate plate (33).

10. Application of a lightweight construction element according to one of claims 1 to 9 as a support element for a solar collector.

## Revendications

1. Elément en construction légère en sandwich avec deux tôles de recouvrement maintenues à distance l'une de l'autre par une structure alvéolaire reliée aux tôles de recouvrement par collage,
caractérisé en ce que la structure alvéolaire est formée par des boîtes en fer-blanc de même taille et en prépondérance cylindriques (11) dont les axes (15) sont perpendiculaires aux tôles de recouvrement (13,14) et qui sont disposées en tassement dense et collées les unes aux autres à leurs points de contact (12).

2. Elément en construction légère selon la revendication 1, caractérisé en ce que les boîtes sont disposées en tassement le plus dense dans lequel une rangée de boîtes (11) est décalée de la moitié du diamètre des boîtes par rapport aux rangées voisines respectives.

3. Elément en construction légère selon les revendications 1 ou 2, caractérisé en ce que les boîtes (11) sont des boîtes de boisson recyclées munies d'un couvercle (17).

4. Elément en construction légère selon l'une des revendications 1 à 3, caractérisé en ce que les fonds (16) des boîtes (11) reposent de manière alternée sur l'une (13) ou l'autre (14) des tôles de recouvrement.

5. Elément en construction légère selon l'une des revendications 1 à 4, caractérisé en ce que les boîtes et/ou les espaces intermédiaires entre les boîtes (11) sont remplis au moins partiellement d'une mousse de plastique portante.

6. Elément en construction légère selon l'une des revendications 1 à 5, caractérisé en ce que les boîtes (11) de l'élément en construction légère (10) sont entourées, à proximité des deux tôles de recouvrement (13, 14), d'un fil (18) ou d'une bande résistant à la traction.

7. Elément en construction légère selon l'une des revendications 1 à 6, caractérisé en ce qu'au moins une tôle de recouvrement (13 ou 14) est repliée à angle droit sur ses bords de sorte à former un caisson ouvert.

8. Elément en construction légère selon l'une des revendications 1 à 6, caractérisé en ce qu'il est entouré d'un cadre (28) constitué par des profilés en U (29) dont les ailettes (30, 31) recouvrent les bords des tôles de recouvrement (13,14).

9. Elément en construction légère selon l'une des revendications 1 à 8, caractérisé en ce que deux structures alvéolaires ou plus en boîtes (11) séparées les unes des autres par une plaque intermédiaire (33) sont implantées entre les tôles de recouvrement (13, 14).

10. Utilisation d'un élément en construction légère selon l'une des revendications 1 à 9 comme élément de support de collecteurs solaires.
